# EUROPEAN PATENT SPECIFICATION

(11) **EP 3 745 629 B1**
(45) Date of publication and mention of the grant of the patent: **04.09.2024**
(21) Application number: 18906130.2
(22) Date of filing: 13.02.2018
(51) Int. Cl.: H04L 1/18, H04W 72/04, H04L 5/00

(54) **COMMUNICATION METHOD AND DEVICE**
KOMMUNIKATIONSVERFAHREN UND -VORRICHTUNG
PROCÉDÉ ET DISPOSITIF DE COMMUNICATION

(43) Date of publication of application: 02.12.2020
(73) Proprietor: HUAWEI TECHNOLOGIES CO., LTD., Shenzhen, Guangdong 518129 (CN)
(72) Inventor: SU, Liyan, Shenzhen, Guangdong 518129 (CN); LI, Chaojun, Shenzhen, Guangdong 518129 (CN); XIA, Jinhuan, Shenzhen, Guangdong 518129 (CN)
(74) Representative: Epping - Hermann - Fischer
(86) International application number: PCT/CN2018/076761
(87) International publication number: WO 2019/157669

(56) References cited:
- WO-A1-2017/078128
- WO-A1-2018/014162
- CN-A- 104 769 857
- US-A1- 2015 003 382
- US-A1- 2018 007 709
- US-A1- 2018 294 927
- US-A1- 2019 140 804
- NTT DOCOMO ET AL: "Remaining DL/UL signaling design for CBG-based (re)transmission", vol. RAN WG1, no. Reno, USA; 20171127 - 20171201, 18 November 2017 (2017-11-18), XP051370252, Retrieved from the Internet <URL:http://www.3gpp.org/ftp/tsg%5Fran/WG1%5FRL1/TSGR1%5F91/Docs/> [retrieved on 20171118]
- HUAWEI ET AL.: "PDSCH reliability for URLLC", 3GPP TSG RAN WG1 MEETING #91, R1-1719407, 1 December 2017 (2017-12-01), XP051369316, Retrieved from the Internet <URL:http://www.3gpp.org/ftp/tsg_ran/wg1_r11/TSGR1_91/Docs/R1-1719407.zip>
- HUAWEI ET AL.: "DCI design for URLLC", 3GPP TSG RAN WG1 MEETING #91, R1-1719408, 1 December 2017 (2017-12-01), XP051369317, Retrieved from the Internet <URL:http://www.3gpp.org/ftp/tsg_ran/wgl_r11/TSGR1_91/Docs/R1-1719408.zip>

## Description

### TECHNICAL FIELD

This application relates to the field of communications technologies, and in particular, to a communication method and apparatus.

### BACKGROUND

Service transmission in a long term evolution (long term evolution, LTE) communications system is scheduled by a base station, where a basic scheduling unit is generally one subframe, with duration of 1 ms. Alternatively, the basic scheduling unit may be referred to as a transmission time interval (transmission time interval, TTI). However, with continuous development and advancement of communications technologies, a new service type such as an ultra-reliable low-latency communication (ultra-reliable and low-latency communications, URLLC) service is introduced into a 5th generation (5th-generation, 5G) communications system.

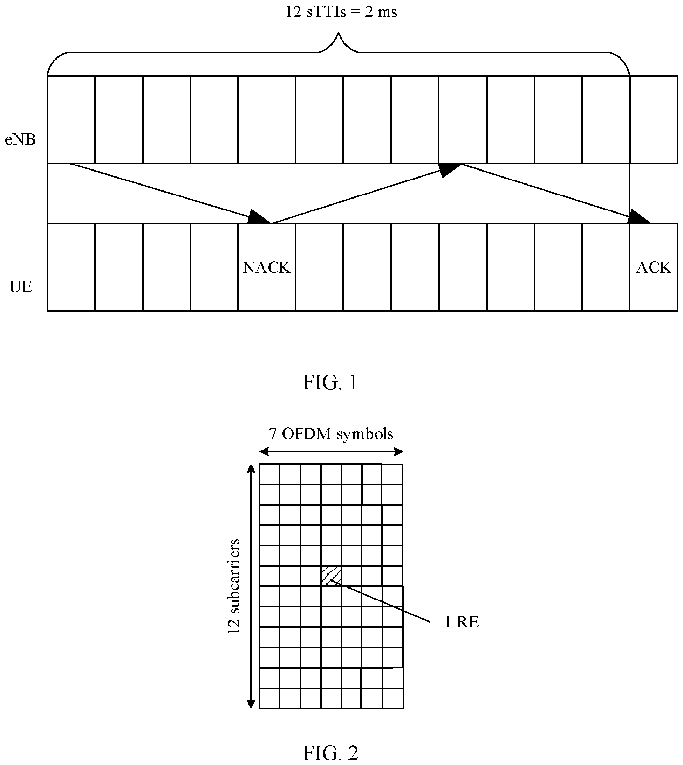

The URLLC service requires not only high reliability but also low latency. For example, in terms of low latency, service transmission of the URLLC service requires to be completed within 1 ms. Therefore, to meet a low latency requirement, a shorter time scheduling unit, that is, a shortened transmission time interval (shortened transmission time interval, sTTI), is introduced in the LTE communications system. The sTTI includes a plurality of time lengths, where a shortest time length is two or three time domain symbols. The time domain symbol herein may be an orthogonal frequency division multiple multiplexing (orthogonal frequency division multiplexing, OFDM) symbol. As shown in FIG. 1, a system supports an n+4 or n+6 timing based on capabilities of different user equipments (user equipment, UE), which indicates that if an initial transmission of a hybrid automatic repeat request (hybrid automatic repeat request, HARQ) process is performed in an sTTI#0, HARQ-based retransmission can only be performed only in an sTTI#8 or sTTI#12. As a result, the UE approximately completes TB demodulation only in an sTTI#12 or sTTI#16. Therefore, even if the n+4 timing is used for calculation, HARQ-based retransmission needs at least 2 ms. It can be learned that even if scheduling is performed in a unit of an sTTI, a low latency requirement of URLLC cannot be met.

WO 2018/014162 A1 discloses a method comprising: a first device receives first indication information transmitted by a second device, the first indication information being used for indicating whether the first device is to transmit acknowledgement/negative-acknowledgement (ACK/NACK) feedback information for first data to the second device; and when the first indication information is used for indicating the first device to transmit the ACK/NACK feedback information for the first data to the second device, the first device transmits the ACK/NACK feedback information for the first data to the second device.

WO 2017/078128 A1 discloses a user terminal with a receiving unit which receives a DL signal, and a control unit which controls transmission of an acknowledgment signal acknowledging the DL signal. The receiving unit receives information relating to transmission permission of an acknowledgment signal with upper layer signaling and/or downlink control information, and the control unit controls the transmission permission of the acknowledgment signal on the basis of said information relating to transmission permission of the acknowledgment signal.

NTT DOCOMO ET AL: "Remaining DL/UL signaling design for CBG-based (re)transmission", 3GPP DRAFT; R1-1720823, 3GPP TSG RAN WG1 Meeting 91, Reno, USA, November 27th - December 1st, 2017; proposed that when a UE is configured with CBG-based (re)transmission, the UE shall monitor two DCI format sizes. One DCI format size e.g. fallback DCI schedules a whole TB and requests TB-level HARQ-ACK feedback. Another DCI format size schedules CBG(s) of a given TB and requests CBG-level HARQ-ACK feedback. Depending on which DCI format UE detects, UE behavior is determined.

### SUMMARY

This application discloses a communication method and apparatus, to effectively meet a low latency requirement of URLLC. The invention is defined by the appended claims.

### BRIEF DESCRIPTION OF DRAWINGS

FIG. 1 is a schematic timing diagram of feedback of an ACK or a NACK according to an embodiment of this application;
FIG. 2 is a schematic structural diagram of a time-frequency resource according to an embodiment of this application;
FIG. 3 is a schematic diagram of a communications system according to an embodiment of this application;
FIG. 4 is a schematic diagram of a HARQ mechanism according to an embodiment of this application;
FIG. 5 is a schematic flowchart of downlink transmission according to an embodiment of this application;
FIG. 6 is a schematic diagram of a relationship between a subframe and an sTTI in uplink transmission according to an embodiment of this application;
FIG. 7 is a schematic diagram of a relationship between a subframe and an sTTI in downlink transmission according to an embodiment of this application;
FIG. 8 is a schematic diagram of a relationship between a subframe and an sTTI in downlink transmission according to an embodiment of this application;
FIG. 9 is a schematic diagram of a relationship between a subframe and an sTTI in downlink transmission according to an embodiment of this application;
FIG. 10 is a schematic flowchart of a communication method according to an embodiment of this application;
FIG. 11 is a schematic diagram of a transmission mode according to an embodiment of this application;
FIG. 12 is a schematic diagram of a transmission mode according to an embodiment of this application;
FIG. 13 is a schematic diagram of a transmission mode according to an embodiment of this application;
FIG. 14 is a schematic flowchart of a communication method according to an embodiment of this application;
FIG. 15 is a schematic flowchart of a communication method according to an embodiment of this application;
FIG. 16 is a schematic flowchart of a communication method according to an embodiment of this application;
FIG. 17 is a schematic flowchart of a communication method according to an embodiment of this application;
FIG. 18 is a schematic diagram of a transmission mode according to an embodiment of this application;
FIG. 19 is a schematic flowchart of a communication method according to an embodiment of this application;
FIG. 20 is a schematic structural diagram of a communications apparatus according to an embodiment of this application;
FIG. 21 is a schematic structural diagram of a communications apparatus according to an embodiment of this application;
FIG. 22 is a schematic structural diagram of user equipment according to an embodiment of this application; and
FIG. 23 is a schematic structural diagram of a network device according to an embodiment of this application.

### DESCRIPTION OF EMBODIMENTS

The embodiments of this application are described below with reference to accompanying drawings in the embodiments of this application.

In an LTE system, a time-frequency resource is divided into an OFDM symbol or a single-carrier frequency division multiple access (single carrier frequency division multiple access, SC-FDMA) symbol (each referred to as a time domain symbol below, symbol for short) in a time domain dimension and a subcarrier in a frequency domain dimension, and a smallest resource granularity is referred to as a resource element (resource element, RE), that is, a time and frequency grid including one time domain symbol in time domain and one subcarrier in frequency domain. FIG. 2 is a schematic structural diagram of a time-frequency resource according to an embodiment of this application. One RE is one OFDM symbol in time domain, and one subcarrier in frequency domain.

Service transmission in an LTE system is scheduled by a base station. When being scheduled at a physical layer, an upper-layer data packet is divided into data packets in a unit of a transport block (transport block, TB), and a basic scheduling time unit is generally one subframe, with duration of 1 ms. Because physical meanings of a TTI and a subframe are basically the same, both the TTI and the subframe are used sometimes. Therefore, the subframe and the TTI in the embodiments of this application may be used interchangeably. One subframe generally includes two slots, and one slot generally includes seven time domain symbols. Therefore, a typical basic structure of a time-frequency resource in the LTE system is as follows: a subcarrier spacing of 15 kHz, time domain symbol duration of about 70 us, and cyclic prefix duration of about 4 to 6 us, where 14 symbols are included every 1 ms.

It may be understood that a shorter time scheduling unit, for example, a unit of one slot or even several time domain symbols, may be further introduced in the LTE system. Therefore, the foregoing description should not be understood as a limitation on the embodiments of this application.

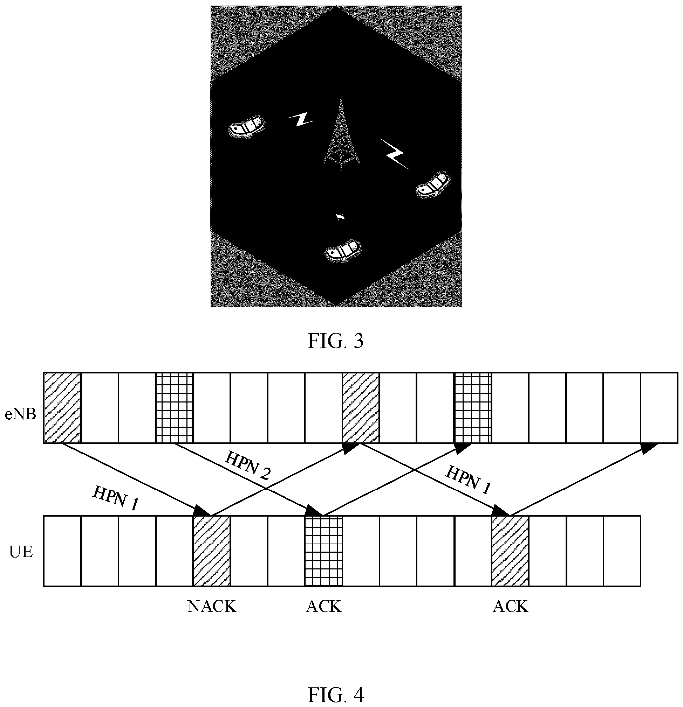

FIG. 3 is a schematic diagram of a communications system according to an embodiment of this application. The solutions in this application are applicable to the communications system. The communications system may include at least one network device (only one network device, for example, a base station eNB shown in the figure) and one or more user equipments (for example, UE 1 to UE 3 shown in the figure) connected to the network device.

The network device may be a device that can communicate with the user equipment. The network device may be any device having a wireless transceiver function, including but not limited to a base station. For example, the base station may be a base station NodeB, or the base station is an evolved NodeB eNodeB, or the base station is a base station gNB in a 5G communications system, or the base station is a base station in a future communications system. Optionally, the network device may alternatively be an access node, a wireless relay node, a wireless backhaul node, or the like in a wireless local area network (wireless fidelity, WiFi) system. Optionally, the network device may alternatively be a radio controller in a cloud radio access network (cloud radio access network, CRAN) scenario. Optionally, the network device may alternatively be a wearable device, a vehicle-mounted device, or the like. Optionally, the network device may alternatively be a small cell, a transmission reference point (transmission reference point, TRP), or the like. Certainly, this application is not limited thereto.

The user equipment is a device having a wireless transceiver function. The user equipment may be deployed on land, including indoor or outdoor, hand-held, wearable, or vehicle-mounted, may be deployed on the water, for example, on a ship, or may be deployed in the air, for example, on an airplane, a balloon, or a satellite. The user equipment may be a mobile phone (mobile phone), a tablet computer, a computer with a wireless transceiver function, virtual reality (virtual reality, VR) user equipment, augmented reality (augmented reality, AR) user equipment, or a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. The user equipment may also be sometimes referred to as a terminal device, access user equipment, a mobile station, a mobile console, a remote station, remote user equipment, a mobile device, a terminal (terminal), a wireless communications device, a UE agent, a UE apparatus, or the like.

In the communications system shown in FIG. 3, when data needs to be transmitted between the base station and the UE, the base station generally first sends downlink control information (downlink control information, DCI) to the UE through a control channel. The control channel herein includes a physical downlink control channel (physical downlink control channel, PDCCH) or a shortened physical downlink control channel (shortened PDCCH, sPDCCH). The control channel may carry scheduling information of a TB on a physical downlink shared channel (physical downlink shared channel, PDSCH) or a physical uplink shared channel (physical uplink shared channel, PUSCH). The DCI includes control information such as resource allocation information, a modulation and coding scheme, and a HARQ of the scheduled TB. The downlink control channel in the application may be a PDCCH or an sPDCCH. The PDCCH is used as an example in the following description of this application. However, a specific name of the downlink control channel is not limited in this application. In addition, a control channel element (control channel element, CCE) in this application may be the CCE, or may be a short control channel element (short CCE, sCCE). The CCE is used as an example in the following description of this application. However, this application is not limited thereto.

Specifically, one PDCCH is transmitted on n consecutive CCEs, where the CCE is a unit of a physical resource, and each CCE includes 36 REs. The PDCCH has four formats, respectively corresponding to aggregation levels (aggregation level, AL) {1, 2, 4, 8}. In other words, the AL of the PDCCH carrying the DCI may be any one of AL 1, AL 2, AL 4, or AL 8.

The base station may determine the AL of the PDCCH based on a factor such as channel quality. For example, if the PDCCH is to be sent to UE with relatively good downlink channel quality (for example, UE located in a cell center), one CCE may be used to send the PDCCH; if the PDCCH is to be sent to UE with relatively poor downlink channel quality (for example, UE located at a cell edge), eight CCEs may need to be used to send the PDCCH, to achieve sufficient robustness. However, the UE does not know the CCEs on which the base station sends the PDCCH, so that the UE needs to perform blind detection on the PDCCH. Specifically, the base station configures a search space (search space, SS), that is, a PDCCH candidate set, for the UE by using higher layer signaling, where the PDCCH candidate set includes several PDCCH candidates (PDCCH candidate). The UE detects, based on a format of DCI that needs to be detected, whether each PDCCH candidate in the search space carries the PDCCH sent to the UE. Specifically, in the LTE system, the search space of each UE includes 22 PDCCH candidates, where distribution of PDCCH candidates at different ALs is shown in Table 1.

**Table 1 Quantity of PDCCH candidates at various ALs**

| AL | Quantity of PDCCH candidates |
|---|---|
| 1 | 6 |
| 2 | 6 |
| 4 | 6 |
| 8 | 4 |

The background related to the control channel is described above, and a process of a HARQ mechanism in LTE is described below.

For example, in downlink, after the UE receives, in a subframe #n, a TB carried in a PDSCH, if decoding is correct, the UE feeds back a positive acknowledgment (acknowledgement, ACK) on an uplink in a subframe #n+k; if the decoding fails, a negative acknowledgment (negative acknowledgment, NACK) is fed back on an uplink. k is predefined or notified by using higher layer signaling. In the LTE system, k=4. If the base station receives the ACK fed back by the UE, the base station starts to construct a new TB, and sends the new TB in a subframe after at least k subframes, that is, a subframe #n+2k or a later subframe. On the contrary, if the base station receives the NACK fed back by the UE, the base station resends data of the same TB in the HARQ process to the UE in a subframe #n+2k or a later subframe, and then the UE may combine the data in the HARQ process with previously received data in the HARQ process, to improve receiving performance.

It can be learned from the foregoing description that using a single HARQ process cannot implement continuous transmission in time domain, which greatly limits a throughput of a system. Therefore, in LTE, a stop-and-wait protocol is used to send data, that is, a plurality of parallel stop-and-wait HARQ processes are used. When one HARQ process is waiting for an ACK or a NACK, the base station may use another HARQ process to continue to transmit the data. As shown in FIG. 4, two processes whose HARQ process numbers (HARQ process number, HPN) are 1 and 2 are used for sending data in parallel, and a base station sends a TB 1 to UE through the HPN 1, and in a process of waiting for the UE to feed back an ACK or a NACK, the base station may further send a TB 2 to the UE through the HPN 2. After the base station receives a feedback message of the TB 1, if a feedback result received by the base station is the NACK, the base station may resend the TB 1 to the UE. In other words, each time the base station receives an ACK fed back by the UE, the base station transmits another TB through the HARQ process. An HPN is expected to be included in the DCI each time the DCI is transmitted to avoid confusion between TBs transmitted in the plurality of HARQ processes.

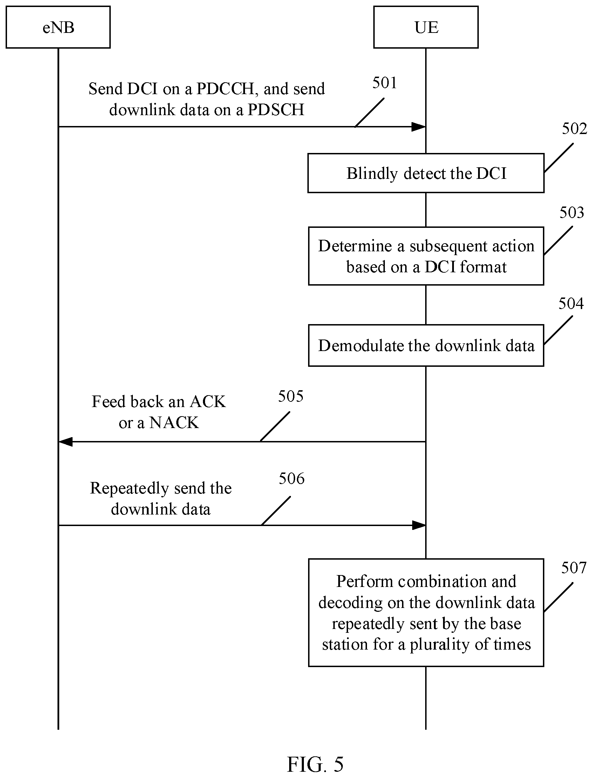

FIG. 5 is a schematic flowchart of downlink transmission according to an embodiment of this application. The downlink transmission process may be implemented based on the communications system shown in FIG. 3. As shown in FIG. 5, the downlink transmission process includes at least the following steps.

501. A base station sends, to UE, DCI on a PDCCH and downlink data on a PDSCH, where the DCI carries a time-frequency resource location of the PDSCH, a modulation and coding scheme, a cyclic redundancy check (cyclic redundancy check, CRC), information related to feedback of an ACK or a NACK, and the like.

502. After receiving the DCI, the UE blindly detects the DCI in each subframe based on a search space SS configured by using higher layer signaling.

When blindly detecting the DCI, the UE may descramble a CRC sequence by using a unique scrambling code of the UE. If the descrambled CRC can be verified, it indicates that the DCI is sent to the UE. If the descrambled CRC fails to be verified, it indicates that the DCI is not destined for the UE, and the UE may continue to blindly detect next DCI.

503. After the DCI destined for the UE is detected, the UE determines a subsequent action based on a DCI format. For example, the UE receives downlink data, or assembles and sends uplink data. Different DCI formats may further indicate different transmission schemes, for example, single-antenna port transmission, multi-antenna port open-loop transmission, and multi-antenna port closed-loop transmission.

Specifically, the UE determines, based on a resource allocation bit field in the DCI, a time-frequency resource location (that is, the time-frequency resource location of the PDSCH) used for the downlink data transmission. Then, the UE queries a table, based on a modulation and coding scheme (modulation and coding scheme, MCS) bit field in the DCI and the resource allocation bit field, to determine a transport block size (transport block size, TBS) in the downlink transmission. The queried table is shown in Table 2. The table lists TBS sizes corresponding to different MCS indexes (*I*_{TBS}) and different quantities of allocated resource blocks (resource block, RB).

**Table 2 TBS table**

| *I*_{TBS} | *N*_{PRB} | | | | | | | | | |
|---|---|---|---|---|---|---|---|---|---|---|
| | 1 | 2 | 3 | 4 | 5 | 6 | 7 | 8 | 9 | 10 |
| 0 | 16 | 32 | 56 | 88 | 120 | 152 | 176 | 208 | 224 | 256 |
| 1 | 24 | 56 | 88 | 144 | 176 | 208 | 224 | 256 | 328 | 344 |
| 2 | 32 | 72 | 144 | 176 | 208 | 256 | 296 | 328 | 376 | 424 |
| 3 | 40 | 104 | 176 | 208 | 256 | 328 | 392 | 440 | 504 | 568 |
| 4 | 56 | 120 | 208 | 256 | 328 | 408 | 488 | 552 | 632 | 696 |
| 5 | 72 | 144 | 224 | 328 | 424 | 504 | 600 | 680 | 776 | 872 |
| 6 | 328 | 176 | 256 | 392 | 504 | 600 | 712 | 808 | 936 | 1032 |
| 7 | 104 | 224 | 328 | 472 | 584 | 712 | 840 | 968 | 1096 | 1224 |
| 8 | 120 | 256 | 392 | 536 | 680 | 808 | 968 | 1096 | 1256 | 1384 |
| 9 | 136 | 296 | 456 | 616 | 776 | 936 | 1096 | 1256 | 1416 | 1544 |
| 10 | 144 | 328 | 504 | 680 | 872 | 1032 | 1224 | 1384 | 1544 | 1736 |
| 11 | 176 | 376 | 584 | 776 | 1000 | 1192 | 1384 | 1608 | 1800 | 2024 |
| 12 | 208 | 440 | 680 | 904 | 1128 | 1352 | 1608 | 1800 | 2024 | 2280 |

It may be understood that the TBSs shown in Table 2 are only an example, and should not be understood as a limitation on this embodiment of this application.

504. The UE demodulates the downlink data based on the TBS calculated in step 503. If the data obtained after demodulation can pass the CRC check, it indicates that the data decoding succeeds; if the data obtained after demodulation fails to pass the CRC check, it indicates that the data decoding fails.

505. The UE feeds back, in a predefined timing, whether data is correctly decoded, that is, feeds back an ACK or a NACK. The UE may determine, based on the DCI, a time-frequency resource used for feeding back the ACK or the NACK.

506. The base station repeatedly transmits the downlink data, and indicates, by using the DCI, that the downlink data is the same as the downlink data transmitted last time.

Optionally, there may be the following two cases in which the base station repeatedly transmits the downlink data:
Case 1: After receiving the ACK or the NACK, the base station determines whether to repeatedly transmit the downlink data (or referred to as retransmission). When receiving the ACK, the base station does not retransmit the downlink data; when receiving the NACK, the base station retransmits the downlink data.
Case 2: Before receiving the ACK or the NACK, the base station repeatedly transmits the downlink data (or referred to as repetition) .

507. After receiving the downlink data repeatedly transmitted by the base station, the UE performs combination and decoding on the downlink data repeatedly transmitted by the base station for a plurality of times.

It may be understood that FIG. 5 shows merely an example of downlink transmission. During specific implementation, there may be more steps than the foregoing steps. Therefore, the downlink transmission process shown in FIG. 5 should not be understood as a limitation.

The technical background described above is based on the LTE system. Currently, a 5G technology has been discussed. From a perspective of compatibility, 5G may be divided into two branches, where one branch is continuous evolution compatible with LTE, and the other branch is a new radio (new radio, NR) technology incompatible with LTE. URLLC is an important technical requirement for the two branches of 5G. URLLC is a new service type introduced in a 5G system. In brief, this service requires that 32-byte (that is, 256 bits) transmission (low latency) to be completed within 1 ms with a success rate of 99.999% (in other words, an error rate is 10⁻⁵, which provides high reliability), or requires that 32 bytes to be transmitted within 10 ms, with a success rate of 99.99% (that is, an error rate is 10⁻⁴, which provides relatively tolerant high reliability). It may be understood that the 32 bytes are only an example, and should not be understood as a limitation on the embodiments of this application.

However, it is found through research that if the base station continues to perform transmission based on structures of a control channel and a data channel in an existing LTE system, a requirement of a URLLC service for high reliability and low latency (for example, transmission of 32 bytes within 1 ms) cannot be effectively met. Therefore, how to meet the foregoing requirements for reliability and latency by using a technology in the LTE system becomes an urgent problem to be resolved.

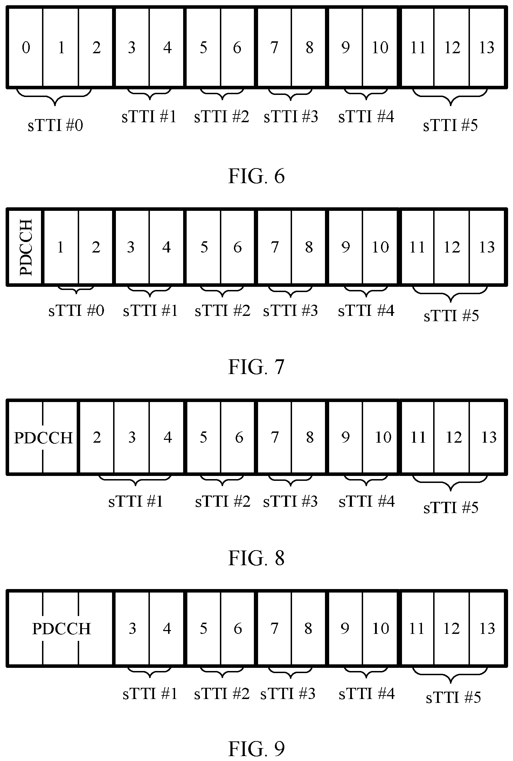

To meet a low latency requirement, a shorter time scheduling unit, that is, an sTTI, is introduced in the LTE system. The sTTI includes a plurality of time lengths, where a shortest time length is two or three time domain symbols. FIG. 6 is a schematic diagram of a relationship between a subframe and an sTTI during uplink scheduling, and FIG. 7 to FIG. 9 are schematic diagrams of a relationship between a subframe and an sTTI during downlink scheduling. As shown in FIG. 6 to FIG. 9, one subframe (that is, 14 OFDM symbols) is divided into six sTTIs whose lengths are 2 or 3 symbols.

It may be understood that even if scheduling is performed in a time unit of the sTTI, at least 2 ms is required to complete a HARQ-based retransmission (as shown in FIG. 1).

To be specific, the HARQ-based retransmission cannot meet a 1 ms latency requirement of URLLC. In other words, feedback of an ACK or a NACK in the prior art becomes unnecessary to the UE under the 1 ms latency requirement in URLLC (even if the base station receives the ACK/NACK, the base station cannot schedule retransmission for the UE in a timely manner). Therefore, in the 1 ms latency requirement, feedback of the ACK/NACK on the PUCCH by the UE only causes interference to another non-URLLC user and another URLLC user that requires a latency of 10 ms.

Therefore, based on the foregoing background, this application provides a communication method, to effectively meet a low latency requirement of a URLLC service as well as reliability is ensured. The communication method in the embodiment of this application is described below.

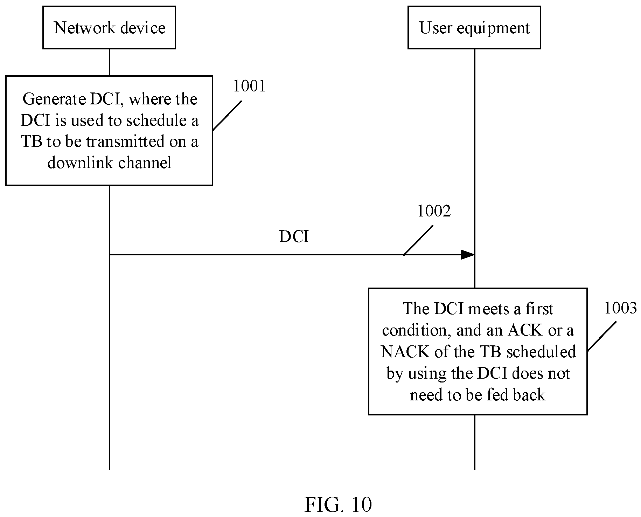

FIG. 10 is a schematic flowchart of the communication method according to the embodiment of this application. As shown in FIG. 10, the communication method includes the following steps. 1001. A network device generates downlink control information DCI, where the DCI is used to schedule a transport block TB to be transmitted on a downlink channel.

Possibly, the DCI may alternatively be DCI scrambled by a cell radio network temporary identifier (cell radio network temporary identifier, C-RNTI).

Optionally, in this embodiment of this application, a format of the DCI generated by the network device may be a first DCI format, and the first DCI format may be used to represent that the DCI is compact DCI (that is, compact DCI). Vividly, the first DCI format may be understood as a format of DCI in which some information is compressed or deleted in LTE, so that a payload size of the DCI is reduced. Specifically, when fewer information bits are transmitted on a same time-frequency resource, a signal-to-noise ratio per information bit increases. Therefore, more redundant information is provided to deliver higher transmission reliability of a PDCCH using compact DCI format. It may be understood that the redundancy information herein may be an encoded parity bit. That the network device generates the DCI may be specifically that the network device generates the DCI based on the first DCI format.

It may be understood that "first" in the first DCI format is merely a name. Therefore, the "first" DCI format in the embodiments of this application should not be understood as a limitation on the embodiments of this application.

1002. The network device sends the DCI to user equipment.

1003. The user equipment receives the DCI, where the DCI meets a first condition, and an ACK or a NACK of the TB scheduled by using the DCI does not need to be fed back, or an ACK does not need to be fed back, or a NACK does not need to be fed back.

A reason why the NACK does not need to be fed back is that for a 1 ms latency requirement, the network device does not have sufficient time to perform retransmission based on the NACK fed back by the user equipment. Because the network device actively repeatedly transmits the TB, reliable transmission of the TB is not affected even if the user equipment does not feed back the NACK. A reason why the ACK does not need to be fed back is that for a 1 ms latency requirement, the network device does not have sufficient time to terminate repeating transmission based on the ACK fed back by the user equipment, so that the user equipment does not need to feed back the ACK.

The first condition may be a condition related to whether the user equipment feeds back the ACK or the NACK. Optionally, when the network device generates the DCI based on the first DCI format, that the DCI meets a first condition may be specifically understood as that the format of the DCI meets the first DCI format. Optionally, step 1003 may alternatively be that after receiving the DCI, the user equipment may determine whether the format of the DCI meets the first DCI format, and when the format of the DCI meets the first DCI format, the user equipment may not feed back an ACK or a NACK. Therefore, when the format of the DCI meets the first DCI format, a condition of the first DCI format may be, for example, a condition that the payload size of the DCI meets.

The first condition may includes: an aggregation level AL of a PDCCH carrying the DCI is greater than or equal to an AL threshold.

In this embodiment of this application, the payload size of the DCI may be specifically understood as a quantity of information bits of the DCI. It may be understood that the first value, the first threshold, the second value, and the third value may be configured by using higher layer signaling, or may be predefined. It may be understood that the higher layer signaling may be specifically radio resource control (radio resource control, RRC) signaling. Specifically, the first value, the first threshold, the second value, and the third value may be preset in the user equipment, for example, these values may be set when the user equipment is delivered. Specifically, the first value and the second value may be a quantity of bits, and the third value is a bit sequence such as "1", "0", or "11". Therefore, whether the first value, the second value, and the third value are specifically values or sequences is not uniquely limited in this embodiment of this application. Specifically, the first value may be 32 bits; the first threshold may be 37 bits; the second value may be: first value + 1, that is, 33 bits; and the third value may be 1.

When the first condition includes that the AL of the PDCCH carrying the DCI is greater than or equal to the AL threshold, the AL threshold may also be configured by using higher layer signaling, or may be predefined. During specific implementation, increasing the AL is a method for enhancing PDCCH reliability. Therefore, in this embodiment of this application, a maximum supported AL may be increased from 8 to 16. Therefore, in this embodiment of this application, the AL threshold may be greater than or equal to 8. To be specific, the network device may send, through eight CCEs, the PDCCH carrying the DCI, or the network device may alternatively send, through 16 CCEs, the PDCCH carrying the DCI. It may be understood that a maximum supported AL is not limited in this embodiment of this application. In a future communications system, the maximum supported AL may alternatively be 32 or the like.

Optionally, in step 1003, after the user equipment receives the DCI, the user equipment needs to determine whether the DCI meets the first condition. The case in which the user equipment determines whether the first condition is met includes: When the user equipment detects the DCI on a PDCCH whose AL is greater than the AL threshold, the user equipment may determine that the DCI meets the first condition. Alternatively, the user equipment may determine, based on the payload size of the DCI, whether the first condition is met, and the like. Alternatively, it may be understood that when the user equipment detects the DCI on a PDCCH whose AL is greater than the AL threshold, the user equipment may determine that the DCI meets the first condition without further detecting the payload size of the DCI. Alternatively, when the user equipment detects the DCI on a PDCCH whose AL is greater than the AL threshold, the user equipment further detects the payload size of the DCI, to further determine whether the DCI meets the first condition, and the like. In this embodiment of this application, a relationship between a condition met by the payload size of the DCI and a condition met by the AL of the PDCCH carrying the DCI is not uniquely limited.

Optionally, the first condition may further include: for example, using a newly added bit field in the DCI to explicitly indicate not to feed back the ACK/NACK, that is, a 1-bit bit field is added to the DCI, and when a value of the bit field is 1, the UE does not feed back the ACK/NACK. Alternatively, the format of the DCI is used for implicit indication. For example, different scrambling codes are used to indicate whether the UE feeds back the ACK/NACK. If the DCI received by the UE is scrambled by using a first scrambling code, the UE does not feed back the ACK/NACK.

It may be understood that, in the schematic flowchart of downlink transmission shown in FIG. 5, the DCI not only includes resource allocation information, MCS information, and CRC information, but also includes information related to feedback of the ACK or the NACK. However, in this embodiment of this application, after the user equipment receives the DCI, the user equipment may not feed back the ACK or the NACK. Therefore, the DCI may include the resource allocation information, the MCS information, and the CRC information, and does not include the information related to feedback of the ACK or the NACK. Alternatively, information related to feedback of the ACK or the NACK in this embodiment of this application may also be referred to as information related to a HARQ process, or the like. This is not limited in this application. The information related to feedback of the ACK or the NACK is used as an example below for description.

The resource allocation information may be used to indicate a time-frequency resource location of a PDSCH, and the user equipment may learn of, based on the resource allocation information, the time-frequency resource location of the PDSCH, to receive the downlink data. The MCS information may be used to indicate a modulation and coding scheme, and the CRC information may be used to indicate the user equipment to check the received DCI or the like. Specifically, the information related to feedback of the ACK or the NACK includes: HARQ process number information, ACK or NACK resource indicator (ACK or NACK resource indicator, ARI) information, and downlink assignment index (downlink assignment indicator, DAI) information. Optionally, the information related to feedback of the ACK or the NACK may further include redundancy version (redundancy version, RV) indication information.

In this embodiment of this application, because the user equipment does not need to feed back the ACK or the NACK, the DCI may not include the ARI information used to indicate a frequency domain resource used for feeding back the HARQ information. Alternatively, because the user equipment does not feed back the ACK or the NACK, the DCI may not include the DAI information used to indicate a quantity of downlink TBs and the ARI information. Alternatively, the DCI may not include HARQ process number information. Alternatively, because the user equipment does not feed back the ACK or the NACK, and the network device may not receive the ACK or the NACK, and may not retransmit the TB, the DCI may not include the RV information used to indicate an initial transmission version and a retransmission version of the user equipment and the ARI information. Alternatively, because initial transmission and retransmission are not performed, the DCI may not include the ARI information, the RV indication information, or the HARQ process number information. The user equipment may learn of, based on the DAI information, a quantity of pieces of downlink data sent by the network device to the user equipment, to notify, when feeding back the ACK or the NACK, the network device of whether the downlink data is correctly received. Therefore, in this embodiment of this application, the DCI may further not include the ARI information, the RV information, the HARQ process number information, or the DAI information.

It may be understood that the information not included in the DCI may be any combination of the foregoing ARI information, HARQ process number information, and DAI information. Alternatively, the information not included in the DCI may be any combination of the foregoing ARI information, RV indication information, HARQ process number information, and DAI information. This is not uniquely limited in this embodiment of this application.

Optionally, the network device may further trigger downlink semi-persistent scheduling (semi-persistent scheduling, SPS) transmission by using the first DCI format. The network device notifies, in a predefined manner, the user equipment that the first DCI is used to activate the SPS when the first DCI meets one or more of the following conditions:
1. A CRC bit of the PDCCH carrying the DCI is scrambled by using an SPS C-RNTI; and
2. All or some information in the first DCI other than flag for uplink/downlink differentiation, the resource allocation information, and the MCS information is set to a predefined first bit sequence, for example, an all-0 sequence.

The network device notifies, in a predefined manner, the user equipment that the first DCI is used to release the SPS when the first DCI meets one or more of the following conditions:
1. A CRC bit of the PDCCH carrying the DCI is scrambled by using an SPS C-RNTI; and
2. All or some information in the first DCI other than indication information for uplink/downlink differentiation and the resource allocation information is set to a predefined second bit sequence, for example, an all-1 sequence.

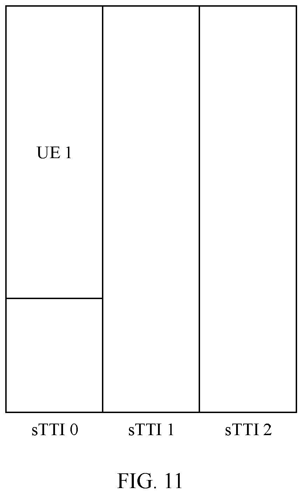

FIG. 10 shows a format of DCI when the user equipment does not feed back the ACK or the NACK. How a network device transmits a TB to user equipment is specifically described below. A method for transmitting the TB by the network device is described below with reference to FIG. 11 to FIG. 13. It may be understood that an example in which a time unit is an sTTI is used for description in FIG. 11 to FIG. 13. During specific implementation, the time unit may alternatively be another time unit such as a subframe or a slot, or may be another shorter time unit. Therefore, the following is merely an example, and should not be understood as a limitation on this embodiment of this application.

### Transmission mode 1:

As shown in FIG. 11, the network device may schedule most or even all resources in one sTTI to user equipment (for example, UE 1), to transmit the TB to the user equipment in one sTTI. In the transmission mode 1, frequency domain resources for data transmission are increased, thereby improving data transmission reliability.

### Transmission mode 2:

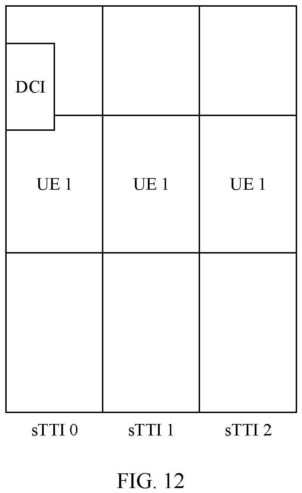

As shown in FIG. 12, the network device transmits TBs to the user equipment in a plurality of sTTIs, the TBs transmitted in each of the plurality of sTTIs are the same, the TBs in the plurality of sTTIs are scheduled by using same DCI, and the TBs in different sTTIs use a same frequency domain resource in different sTTIs. After receiving all the TBs, the user equipment performs combination and decoding.

### Transmission mode 3:

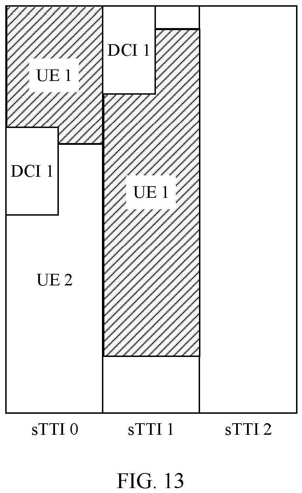

As shown in FIG. 13, the network device transmits TBs to the user equipment in a plurality of sTTIs, the TBs transmitted in each of the plurality of sTTIs are the same, and the TBs in each sTTI are scheduled by using independent DCI. As shown in FIG. 13, the DCI is transmitted in both an sTTI 0 and an sTTI 1. After receiving all the TBs, the user equipment performs combination and decoding. In the transmission mode 2 and the transmission mode 3, time domain resources for data transmission are increased, thereby improving data transmission reliability. Compared with the transmission mode 2, in the transmission mode 3, because independent DCI-based scheduling is performed in each sTTI, resource allocation is more flexible, and reliability of corresponding data transmission is higher. On the other hand, because there is independent DCI in each sTTI in the transmission mode 3, control signaling overheads in the transmission mode 3 are greater than those in the transmission mode 2.

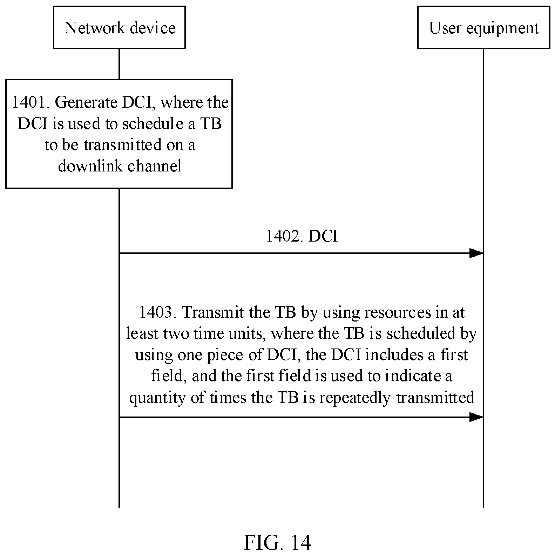

Based on the foregoing transmission modes, in a process in which the network device transmits the TBs to the user equipment in the plurality of sTTIs, to improve reliability, although the network device transmits same TBs in the plurality of sTTIs, the user equipment does not know whether TBs transmitted by the network device for a plurality of times are the same, and does not know how many times the network device repeatedly transmits the TBs. Therefore, with reference to the foregoing transmission modes, an embodiment of this application further provides a communication method. FIG. 14 is a schematic flowchart of the communication method according to the embodiment of this application. As shown in FIG. 14, the communication method includes at least the following steps.

1401. A network device generates DCI, where the DCI is used to schedule a TB to be transmitted on a downlink channel.

1402. The network device sends the DCI to user equipment.

1403. The network device transmits the TB by using resources in at least two time units, where the TB transmitted by using the resources in the at least two time units is scheduled by using one piece of the DCI, the DCI includes a first field, and the first field is used to indicate a quantity of times the TB is repeatedly transmitted.

For example, when the network device transmits the TB in the transmission mode shown in FIG. 12, the network device adds the first field to the DCI, to effectively indicate how many times the network device repeatedly transmits the TB to the user equipment. Therefore, after receiving the data that is repeatedly transmitted for a plurality of times, the user equipment may perform combination and decoding on all the received data.

It may be understood that, during specific implementation, when the network device transmits the TB in the transmission mode shown in FIG. 11, the DCI generated by the network device may also include the first field, to indicate that the TB is transmitted only once to the user equipment. Therefore, during specific implementation, the foregoing three implementations are not uniquely limited in this embodiment of this application.

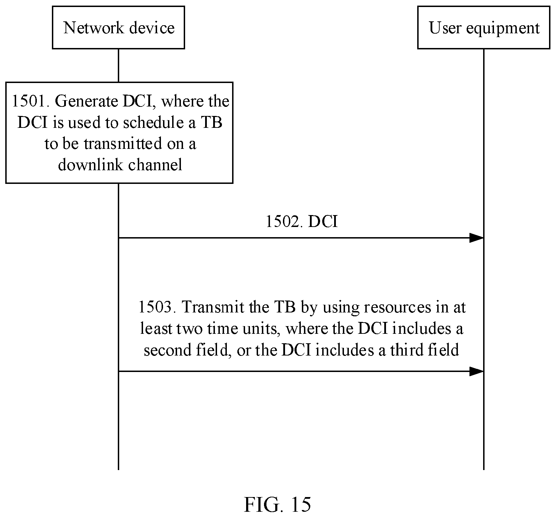

Optionally, with reference to the foregoing transmission modes, an embodiment of this application further provides a communication method. FIG. 15 is a schematic flowchart of the communication method according to the embodiment of this application. As shown in FIG. 15, the communication method includes at least the following steps.

1501. A network device generates DCI, where the DCI is used to schedule a TB to be transmitted on a downlink channel.

1502. The network device sends the DCI to user equipment.

1503. The network device transmits the TB by using resources in at least two time units, where the TB is scheduled by using DCI corresponding to each of the at least two time units, and the DCI includes a second field, and the second field is used to indicate whether to repeatedly transmit the TB in a next time unit; or the DCI includes a third field, and the third field is used to indicate a sequence number of repeating transmission of the TB.

In this embodiment of this application, each time the network device transmits the TB, frequency domain resources in each time unit may be different. Therefore, in this case, the network device needs to indicate a time-frequency resource location of the TB to the user equipment by using the DCI. Therefore, when the network device transmits the TB in the at least two time units, the TB in each time unit is scheduled by using the DCI in each time unit. To enable the user equipment to clearly learn whether the received TB is a repeatedly transmitted TB, the DCI may include the second field, and the second field is used to indicate whether the user equipment transmits the TB in a next minimum transmission time unit, or the DCI may alternatively include the third field, so that the user equipment learns, by using the third field, a specific time the received TB is transmitted.

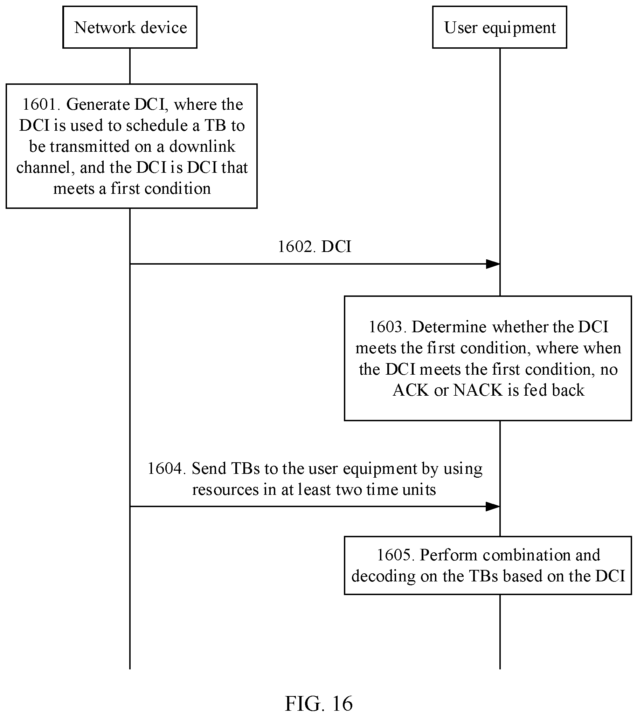

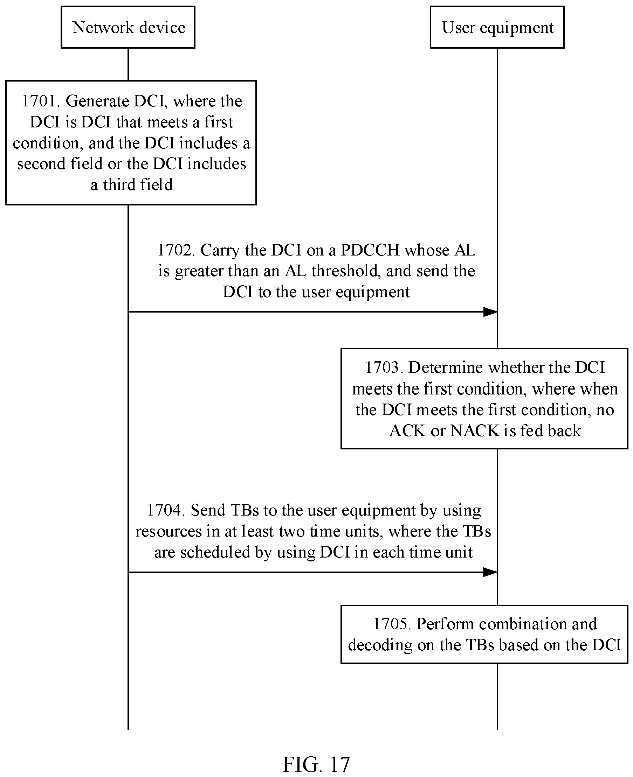

The foregoing describes the communication method provided in the embodiments of this application with reference to the transmission modes in FIG. 11 to FIG. 13, and the following embodiments of this application provide a communication method (as shown in FIG. 16 and FIG. 17) with reference to the communication method shown in FIG. 10 and the transmission modes in FIG. 11 to FIG. 13. FIG. 16 is a schematic flowchart of the communication method according to the embodiment of this application. The communication method is shown when a network device transmits TBs in at least two time units, the TBs in the at least two time units are the same, and the TBs are scheduled by using one piece of DCI. As shown in FIG. 16, the communication method includes at least the following steps.

1601. The network device generates DCI, where the DCI is used to schedule the TBs to be transmitted on a downlink channel.

An implementation of the first condition is the same as the implementation in the communication method shown in FIG. 10. Details are not described herein again.

Optionally, the DCI includes a first field, and the first field is used to indicate a quantity of times the TB is repeatedly transmitted. Alternatively, when the DCI does not include the first field, a quantity of times the TBs are repeatedly transmitted does not exceed a quantity threshold, and the quantity threshold is configured by using higher layer signaling or is predefined. Optionally, the quantity threshold may be 3.

Specifically, the DCI may include resource allocation information, MCS information, and CRC information, and does not include information related to feedback of an ACK or a NACK. For a specific implementation, refer to FIG. 10. Details are not described herein again.

1602. The network device sends the DCI to user equipment.

1603. The user equipment receives the DCI, and determines whether the DCI meets the first condition, where when the DCI meets the first condition, no ACK or NACK is fed back.

It may be understood that for a specific implementation of step 1603, refer to the implementation shown in FIG. 10. Details are not described herein again.

1604. The network device sends the TBs to the user equipment by using resources in the at least two time units, where the resources in the at least two time units are used to transmit data of the TBs, and data transmission in the at least two time units is scheduled by using same DCI.

1605. After receiving the TBs, the user equipment performs combination and decoding on the TBs based on the DCI.

When the DCI includes the first field, after receiving all the TBs, the user equipment may perform combination and decoding on the TBs.

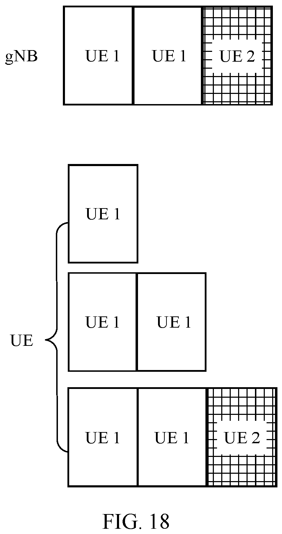

When the DCI does not include the first field, as shown in FIG. 18, FIG. 18 shows a transmission mode according to an embodiment of this application. In this transmission mode, the network device may not indicate, to the user equipment, a quantity of times the DCI is repeatedly transmitted. For example, a network device (for example, a gNB in the figure) sends a TB to user equipment (for example, UE 1 in the figure) in an sTTI 1 and an sTTI 2 respectively. After receiving the DCI, the UE 1 may first decode the TB in the sTTI 1 based on resource allocation (resource allocation, RA) information and the MCS information in the DCI, and if the decoding is correct, the decoding ends. If the decoding fails, the UE 1 waits for a TB transmitted in a next time unit (for example, the sTTI 2), and performs combination and decoding on the TB in the sTTI 2 and the TB in the sTTI 1. If the combination and decoding is correct, the decoding ends. If the combination and decoding fail, the UE 1 continues to receive a TB transmitted in a next time unit. Alternatively, the UE 1 stops performing combination and decoding until a quantity threshold is reached. As shown in FIG. 17, because the network device transmits a TB of UE 2 in a next sTTI, when the user equipment performs decoding for the third time, an error inevitably occurs because data of another UE is mixed. As compared with a mode in which the DCI includes the first field, a probability of a decoding error of the user equipment is not increased in the mode in which the DCI does not include the first field shown in FIG. 18. Instead, a payload size of the DCI is smaller, and DCI transmission reliability is improved.

FIG. 17 is a schematic flowchart of the communication method according to the embodiment of this application. According to the communication method, data of a same TB may be transmitted by a network device in at least two time units, and the data of the TB in each time unit is independently scheduled by using DCI in each time unit. As shown in FIG. 17, the communication method includes at least the following steps.

1701. The network device generates DCI, where the DCI is used to schedule a TB to be transmitted on a downlink channel, the DCI is DCI that meets a first condition, and the DCI includes a second field, and the second field is used to indicate whether to repeatedly transmit the TB in a next time unit; or the DCI includes a third field, and the third field is used to indicate a sequence number of repeating transmission of the TB.

1702. The network device sends the DCI to user equipment.

1703. The user equipment receives the DCI, and determines whether the DCI meets the first condition, where when the DCI meets the first condition, no ACK or NACK is fed back, the ACK is used to indicate that the TB is correctly decoded, and the NACK is used to indicate that the TB is not correctly decoded.

1704. The network device sends the TBs to the user equipment by using resources in the at least two time units, where the resources in the at least two time units are used to transmit the TBs, and the TBs are scheduled by using DCI in each time unit.

1705. After receiving the TBs, the user equipment performs combination and decoding on the TBs based on the DCI.

Specifically, when the DCI includes the second field, for example, an indication field of the second field is 1-bit information, indicating whether to repeatedly transmit the TB in a next sTTI. If the indication field in the DCI in an sTTI 1 is 1, it indicates that the TB is repeatedly transmitted in an sTTI 2. However, if the indication field in the DCI in the sTTI 2 is 0, it indicates that the TB is not repeatedly transmitted in an sTTI 3. After receiving the TB in the sTTI 1 and receiving the TB in the sTTI 2, the user equipment may perform combination and decoding.

Specifically, when the DCI includes the third field, the third field is used to indicate a specific time the TB is repeatedly transmitted. For example, the DCI in the sTTI 1 indicates that the TB is transmitted for the first time, the DCI in the sTTI 2 indicates that the TB is transmitted for the second time, and the DCI is not detected in the sTTI 3, or the third field in the DCI is detected to indicate the first transmission. In this case, it indicates that the TB in the sTTI 3 is different from the TBs in the sTTI 1 and the sTTI 2, and the user equipment may perform combination and decoding on the TBs in the sTTI 1 and the sTTI 2. If the DCI in the sTTI 3 indicates the third transmission, it indicates that the TB in the sTTI 3 is the same as the TBs in the sTTI 1 and the sTTI 2. It may be understood that because a same TB is transmitted in each time unit, and the DCI is transmitted in each time unit, the third field may also be referred to as a sequence number indicating repeating transmission of the DCI, that is, indicating a specific time the DCI is repeatedly transmitted. For the communication method shown in FIG. 17, compared with the communication method shown in FIG. 16, assuming that the UE 1 has occupied most resources in the sTTI 1 and that there are few remaining resources, even if the UE 1 schedules three times of the remaining resources in the sTTI 1 to perform transmission by using the communication method shown in FIG. 16, a reliability requirement cannot be met. In this case, the communication method shown in FIG. 17 is used for transmission, so that a waste of resources can be effectively avoided. During implementation of this embodiment of this application, not only transmission latency is reduced when the network device may indicate, by using the DCI, to the user equipment whether to feed back the ACK or the NACK, but also transmission reliability is effectively ensured based on multi-time unit scheduling. This meets a 1 ms latency requirement and a reliability requirement of URLLC. In addition, because the user equipment does not need to feed back the ACK or the NACK, the network device does not receive the ACK or the NACK, and therefore does not retransmit data based on the ACK or the NACK fed back by the user equipment, thereby avoiding interference to another user during data retransmission.

It may be understood that focuses in the foregoing described embodiments are different. Therefore, for an implementation that is not described in detail, refer to another embodiment. Details are not described herein again.

To describe the communication methods shown in FIG. 16 and FIG. 17 more vividly, in the following embodiment of this application, interaction between a terminal device and a network device is used as an example to describe the communication methods in the embodiments of this application. Implementations of the communication methods in specific scenarios are as follows:

1. The terminal device determines, based on higher layer signaling, a search space SS and a DCI format that needs to be detected on each PDCCH candidate.

Optionally, an aggregation level of the PDCCH candidate included in the SS is included in a set {1, 2, 4, 8, 16}. The network device indicates, to the terminal device by using the higher layer signaling, a total quantity of PDCCH candidates at each aggregation level and resources (CCEs) on which the PDCCH candidates are located.

Optionally, the quantity of PDCCH candidates at different ALs included in the SS is shown in Table 3.

**Table 3 Quantity of PDCCH candidates at various ALs**

| AL | Quantity of PDCCH candidates |
|---|---|
| 1 | 6 |
| 2 | 6 |
| 4 | 6 |
| 8 | 4 |
| 16 | 2 |

Optionally, the network device indicates, by using the higher layer signaling, the terminal device to detect a first DCI format when an AL is greater than or equal to M, and detect another DCI format when the AL is less than or equal to N, where M is greater than or equal to N. It may be understood that the another DCI format described herein may be a DCI format different from the first DCI format. For example, DCI in the another DCI format may include information related to feedback of the ACK or the NACK. Specifically, M=N=8. Alternatively, M=16, and N=8. It may be understood that when M=N=8, and the terminal device detects the DCI on the PDCCH whose AL is equal to 8, the terminal device may not directly determine whether the DCI is in the first DCI format. Therefore, the terminal device may further need to determine, based on the DCI format, for example, based on the payload size of the DCI, whether the DCI is in the first DCI format.

2. The terminal device performs blind detection on the DCI, and if a format of the blindly detected DCI is the first DCI format, the terminal device does not feed back the ACK or the NACK.

It may be understood that, when the terminal device detects that the format of the DCI is the first DCI format, the terminal device may also determine that data corresponding to the DCI is data of a 1 ms URLLC service; when the terminal device detects that the format of the DCI is not the first DCI format, the data of the DCI corresponds to data of another service.

Optionally, when the format of the DCI blindly detected by the terminal device is another DCI format, the terminal device may feed back the ACK or the NACK to the network device.

Optionally, the first DCI format includes resource allocation, an MCS bit field, and a CRC bit, and does not include a HARQ-related bit field, for example, a HARQ process number, a redundancy version indicator, a downlink assignment index DAI, or an ACK or NACK resource indicator ARI. Optionally, the DCI in the first DCI format may include at least the following information:
a. Indication information for uplink/downlink differentiation (1 bit), which may be used to differentiate whether the DCI is used for uplink scheduling or downlink scheduling;
b. Resource allocation information (4 to 9 bits), which may be used to indicate a time-frequency resource location of data received by the terminal device;
c. MCS bit field (with a maximum of 5 bits), which may be used to indicate a modulation and coding scheme of the terminal device;
d. Repeating transmission index field (0 to 2 bits), for example, may be the first field, the second field, or the third field in the foregoing embodiment;
e. DM-RS location indication information (0 to 1 bit, depending on a configuration of higher layer signaling);
f. Precoding information (whether the precoding information is available or not and a size of the precoding information depend on the configuration of the higher layer signaling, and the precoding information occupies a maximum of six bits);
g. Used/unused sPDCCH resource indication (whether the sPDCCH resource indication is available or not and a size of the sPDCCH resource indication depend on the configuration of the higher layer signaling, and the sPDCCH resource indication occupies a maximum of two bits); and
h. CRC bits (16 bits).

In other words, the DCI in the first DCI format may occupy 26 to 42 bits.

It may be understood that the information included in the DCI in the first DCI format in this embodiment of this application is only an example. During specific implementation, more information other than the foregoing information may be included. Therefore, the DCI in the first DCI format should not be understood as a limitation on this embodiment of this application.

3. The terminal device receives and demodulates downlink data based on an indication of the DCI. The downlink data may be downlink data of single transmission shown in FIG. 11, or may be downlink data of repeating transmission by using one piece of DCI shown in FIG. 12, or may be downlink data of repeating transmission by using a plurality of pieces of DCI shown in FIG. 13. A specific transmission mode is not limited in this embodiment of this application.

The terminal device determines whether the downlink data is correctly received. When the DCI format is the first DCI format, the terminal device does not feed back the ACK/NACK information. When the DCI format is another DCI format, the terminal device needs to feed back the ACK/NACK information. In this application, the terminal device identifies, by using the DCI format, whether the ACK/NACK should be fed back, thereby avoiding interference to another terminal device when the PUCCH is sent unnecessarily.

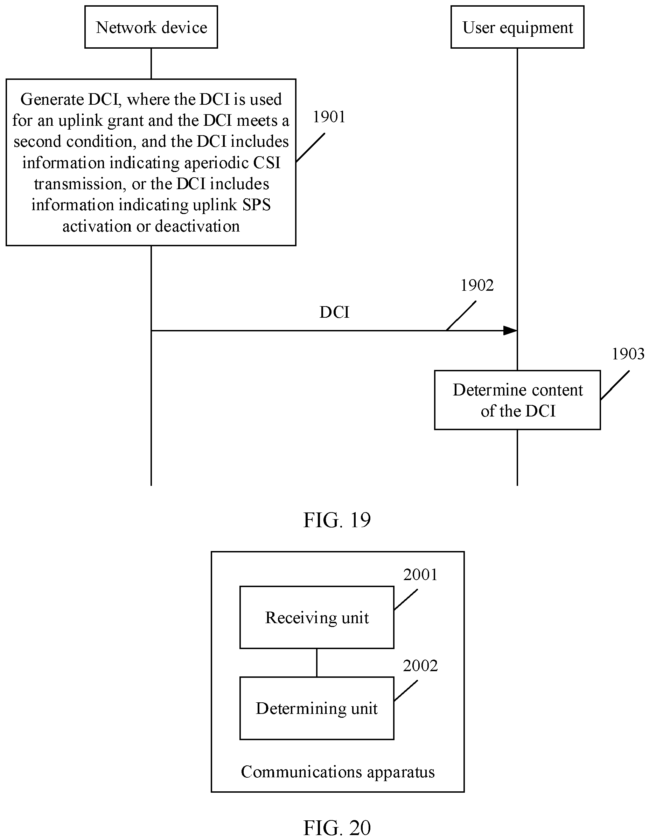

FIG. 19 is a schematic flowchart of a communication method according to an embodiment of this application. As shown in FIG. 19, the communication method includes at least the following steps. 1901. A network device generates DCI, where the DCI is used for an uplink grant, the DCI meets a second condition, and the DCI includes information indicating aperiodic CSI transmission, or the DCI includes information indicating uplink SPS activation or deactivation.

It may be understood that the DCI may be used to schedule uplink transmission, but cannot be used to schedule uplink data transmission. Therefore, in this embodiment of this application, the uplink grant specifically means indicating the aperiodic channel state information (channel state information, CSI) transmission by using the DCI, or the uplink grant specifically means indicating the uplink SPS activation or deactivation by using the DCI.

Optionally, in this embodiment of this application, a format of the DCI generated by the network device may be a second DCI format, and the second DCI format may be used to represent that the DCI is compact DCI. Therefore, that the network device generates the DCI may be specifically that the network device generates the DCI based on the second DCI format. That the DCI meets a second condition may be specifically understood as that the format of the DCI meets the second DCI format.

Specifically, the second condition includes: a payload size of the DCI is equal to a first value; or a payload size of the DCI is less than a first threshold; or a payload size of the DCI is equal to a second value, and a value of a format identifier field in the DCI is equal to a third value; or an aggregation level AL of a PDCCH carrying the DCI is greater than or equal to an AL threshold. It may be understood that, for a related implementation of the payload size of the DCI, refer to the communication method shown in FIG. 10. Details are not described herein again.

Optionally, the DCI includes a fourth field, and the fourth field is used to indicate the aperiodic CSI transmission or used to indicate the uplink SPS activation or deactivation. It may be understood that the fourth field may be specifically used to differentiate whether the DCI is used to indicate the aperiodic CSI transmission or used to indicate the uplink SPS activation or deactivation.

Optionally, the DCI includes a fifth field, and when the fourth field indicates the uplink SPS activation or deactivation, the fifth field is used to indicate a modulation and coding scheme MCS; or when the fourth field indicates the aperiodic CSI transmission, the fifth field is used to indicate a CSI request. It may be understood that, when the fourth field indicates the aperiodic CSI transmission, the fifth field indicates whether user equipment needs to send aperiodic CSI and content included in the CSI, and whether the CSI is fed back in a wideband form or a narrowband form. The content included in the CSI is, for example, a precoding matrix indication (precoding matrix indication, PMI), a rank indication (rank indication, RI), and a channel quality indicator (channel quality indicator, CQI). That the CSI is fed back in a wideband form means that only one piece of average CSI (for example, a PMI, an RI, and a CQI) is fed back in all bandwidths, and that the CSI is fed back in a narrowband form means that one piece of CSI is fed back every N RBs, where a value of N is predefined.

Optionally, the DCI includes a sixth field, the sixth field is a virtual cyclic redundancy check CRC, and when the DCI is used to activate uplink SPS, the virtual CRC is set to a predefined third bit sequence; or when the DCI is used to deactivate uplink SPS, the virtual CRC is set to a predefined fourth bit sequence. Specifically, the third bit sequence may be an all-0 sequence, and the fourth bit sequence may be an all-1 sequence.

The virtual CRC is a predefined bit sequence added by the network device to the DCI, and a function of the virtual CRC is similar to that of the CRC. Specifically, after the user equipment receives the DCI, and determines, by using a scrambling code, that the DCI is sent by the network device to the user equipment, the user equipment further needs to verify whether the virtual CRC in the DCI is a predefined sequence. If the sequence is a predefined sequence, it indicates that the DCI is sent by the network device to the user equipment, and the user equipment further processes the DCI, for example, reads corresponding information from each bit field of the DCI. If the sequence is not a predefined sequence, it indicates that the DCI just happens to pass the CRC check in a demodulation process, but is actually not sent by the network device to the user equipment. In this case, the user equipment discards the DCI without performing further processing.

This design has the following two advantages:
First, a payload size of the second DCI format may be aligned with that of the first DCI format by setting the virtual CRC, thereby reducing a quantity of blind detection times required when the user equipment detects the first DCI format and the second DCI format.
Second, a false alarm probability of the second DCI format may be further reduced by setting the virtual CRC. As described above, some DCI that is not sent to the user equipment may happen to pass the CRC check. In an existing LTE system, CRC is 16 bits in total, so that a probability that a CRC check is just passed is 2⁻¹⁶ (about 1.5 × 10⁻⁵). This probability is not small enough in a URLLC system, and needs to be further reduced. If an X-bit virtual CRC is added, the probability can be reduced to 2^{-(16+X)}. This helps improve system transmission reliability.

Specifically, the DCI includes resource allocation information and cyclic redundancy check CRC information, and does not include hybrid automatic repeat request HARQ process number information. It may be understood that the DCI may further include indication information for uplink/downlink differentiation or the like. Therefore, during specific implementation, the DCI may further include other information. This is not limited in this application.

To describe the DCI that meets the second condition in this embodiment of this application more vividly, the DCI may include the following information: indication information for uplink/downlink differentiation (1 bit), indication information for SPS activation/release and CSI request differentiation (1 bit), resource allocation (6 to 9 bits), aperiodic CSI request or MCS (X bits), virtual CRC bits (Y bits), and CRC bits (16 bits). Optionally, X is a larger value of bit quantities required for the CSI request and the MCS. For example, if 3 bits are required for triggering the aperiodic CSI, and 4 bits are required for an MCS indication in SPS activation, X=max{3,4}=4. In this case, when the aperiodic CSI is triggered, a zero is padded to obtain 4 bits, so that the quantity of bits of the CSI request is aligned with the quantity of bits of an MCS field. Optionally, the virtual CRC bit is used to further differentiate whether the SPS is activated or released.

1902. The network device sends the DCI to the user equipment.

1903. The user equipment receives the DCI, and determines content of the DCI.

The DCI meets the second condition, and the DCI includes the information indicating aperiodic CSI transmission, or the DCI includes the information indicating uplink SPS activation or deactivation.

During implementation of this embodiment of this application, the payload size of downlink DCI can be reduced, so that a proportion of redundant information in the DCI increases, thereby improving transmission reliability.

The foregoing describes in detail the communication method provided in this application, and the following specifically describes the communications apparatus provided in this application.

FIG. 20 shows a communications apparatus according to an embodiment of this application. The communications apparatus may be user equipment, or may be a chip applied to user equipment. As shown in FIG. 20, the communications apparatus may include a receiving unit 2001.

In an embodiment, the receiving unit 2001 may be configured to receive downlink control information DCI, where the DCI is used to schedule a transport block TB to be transmitted on a downlink channel, where when the DCI meets a first condition, the communications apparatus does not feed back an ACK or a NACK, the ACK is used to indicate that the TB is correctly received, and the NACK is used to indicate that the TB is not correctly received. During implementation of this embodiment of this application, when the DCI meets the first condition, the positive acknowledgment ACK or the negative acknowledgment NACK may not be fed back, so that an interaction time between devices can be reduced, thereby ensuring that service transmission is completed within 1 ms, to meet a low latency requirement of URLLC.

The first condition includes: an aggregation level AL of a PDCCH carrying the DCI is greater than or equal to an AL threshold.

Specifically, the DCI includes a first field, and the first field is used to indicate a quantity of times the TB is repeatedly transmitted.

Specifically, the DCI includes a second field, and the second field is used to indicate whether to repeatedly transmit the TB in a next time unit; or the DCI includes a third field, and the third field is used to indicate a sequence number of repeating transmission of the TB.

Specifically, the DCI includes resource allocation information, modulation and coding scheme MCS information, and cyclic redundancy check CRC information, and does not include information related to feedback of the ACK or the NACK.

Specifically, the information related to feedback of the ACK or the NACK includes: hybrid automatic repeat request HARQ process number information, ACK or NACK resource indicator ARI information, and downlink assignment index DAI information.

It may be understood that the communications apparatus shown in FIG. 20 may be configured to perform the procedure of the method shown in FIG. 10, or may be configured to perform the procedure of the method shown in FIG. 16 or FIG. 17. Therefore, for a specific implementation, refer to the foregoing embodiment. Details are not described herein again.

In another embodiment, the communications apparatus shown in FIG. 20 may further include a determining unit 2002. Specifically, details are as follows:
the receiving unit 2001 is further configured to receive DCI, where the DCI is used for an uplink grant; and
the determining unit 2002 is configured to determine content of the DCI, where the DCI meets a second condition, and the DCI includes information indicating aperiodic channel state information CSI transmission, or the DCI includes information indicating uplink semi-persistent scheduling SPS activation or deactivation.

Specifically, the second condition includes: a payload size of the DCI is equal to a first value; or a payload size of the DCI is less than a first threshold; or a payload size of the DCI is equal to a second value, and a value of a format identifier field in the DCI is equal to a third value; or an aggregation level AL of a PDCCH carrying the DCI is greater than or equal to an AL threshold. Specifically, the DCI includes a fourth field, and the fourth field is used to indicate the aperiodic CSI transmission or used to indicate the uplink SPS activation or deactivation.

Specifically, the DCI includes a fifth field, and when the fourth field indicates the uplink SPS activation or deactivation, the fifth field is used to indicate a modulation and coding scheme MCS; or when the fourth field indicates the aperiodic CSI transmission, the fifth field is used to indicate a CSI request.

Specifically, the DCI includes a sixth field, the sixth field is a virtual cyclic redundancy check CRC, and when the DCI is used to activate uplink SPS, the virtual CRC is set to a predefined third bit sequence; or when the DCI is used to deactivate uplink SPS, the virtual CRC is set to a predefined fourth bit sequence.

Specifically, the DCI includes resource allocation information and cyclic redundancy check CRC information, and does not include hybrid automatic repeat request HARQ process number information.

During implementation of this embodiment of this application, the payload size of downlink DCI can be reduced, so that a proportion of redundant information in the DCI increases, thereby improving transmission reliability.

It may be understood that the communications apparatus shown in FIG. 20 may be configured to perform the procedure of the method shown in FIG. 19. Therefore, for a specific implementation, refer to the foregoing embodiment. Details are not described herein again.

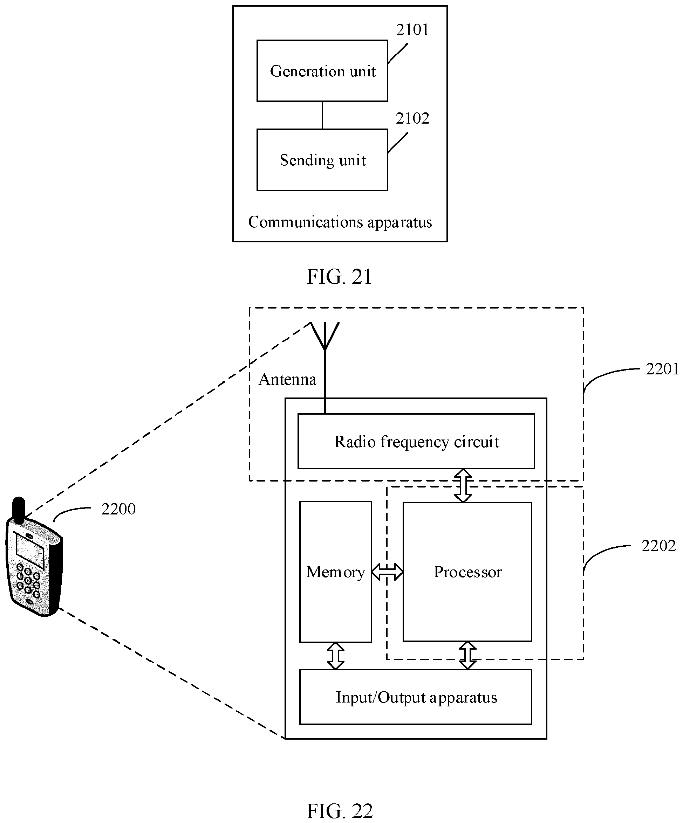

FIG. 21 shows a communications apparatus according to an embodiment of this application. The communications apparatus may be a network device, or may be a chip applied to a network device. As shown in FIG. 21, the communications apparatus may include a generation unit 2101 and a sending unit 2102.

In an embodiment, the generation unit 2101 may be configured to generate downlink control information DCI, where the DCI is used to schedule a transport block TB to be transmitted on a downlink channel. The sending unit 2102 is configured to send the DCI to user equipment, where when the DCI meets a first condition, the DCI indicates the user equipment not to feed back a positive acknowledgment ACK or a negative acknowledgment NACK, the ACK is used to indicate that the TB is correctly received, and the NACK is used to indicate that the TB is not correctly received.

The first condition includes: an aggregation level AL of a PDCCH carrying the DCI is greater than or equal to an AL threshold.

Specifically, the DCI includes a first field, and the first field is used to indicate an indication field of a quantity of times the TB is repeatedly transmitted.

Specifically, the DCI includes a second field, and the second field is used to indicate whether to repeatedly transmit the TB in a next time unit; or the DCI includes a third field, and the third field is used to indicate a sequence number of repeating transmission of the TB.

Specifically, the DCI includes resource allocation information, modulation and coding scheme MCS information, and cyclic redundancy check CRC information, and does not include information related to feedback of the ACK or the NACK.

Specifically, the information related to feedback of the ACK or the NACK includes: hybrid automatic repeat request HARQ process number information, ACK or NACK resource indicator ARI information, and downlink assignment index DAI information.

During implementation of this embodiment of this application, the DCI that meets the first condition is generated, so that the user equipment may be indicated not to feed back the positive acknowledgment ACK or negative acknowledgment NACK, thereby reducing an interaction time between devices, and ensuring that service transmission is completed within 1 ms, to meet a low latency requirement of URLLC.

It may be understood that the communications apparatus shown in FIG. 21 may be configured to perform the procedure of the method shown in FIG. 10, or may be configured to perform the procedures of the methods shown in FIG. 14 and FIG. 15, or may be configured to perform the procedure of the method shown in FIG. 16 or FIG. 17. Therefore, for a specific implementation, refer to the foregoing embodiment. Details are not described herein again.

In another embodiment, the generation unit 2101 is configured to generate downlink control information DCI, where the DCI is used for an uplink grant, the DCI meets a second condition, and the DCI includes information indicating aperiodic channel state information CSI transmission, or the DCI includes information indicating uplink semi-persistent scheduling SPS activation or deactivation; and
the sending unit 2102 is configured to send the DCI to user equipment.

Specifically, the second condition includes: a payload size of the DCI is equal to a first value; or a payload size of the DCI is less than a first threshold; or a payload size of the DCI is equal to a second value, and a value of a format identifier field in the DCI is equal to a third value; or an aggregation level AL of a PDCCH carrying the DCI is greater than or equal to an AL threshold. Specifically, the DCI includes a fourth field, and the fourth field is used to indicate the aperiodic CSI transmission or used to indicate the uplink SPS activation or deactivation.

Specifically, the DCI includes a fifth field, and when the fourth field indicates the uplink SPS activation or deactivation, the fifth field is used to indicate a modulation and coding scheme MCS; or when the fourth field indicates the aperiodic CSI transmission, the fifth field is used to indicate a CSI request.

Specifically, the DCI includes a sixth field, the sixth field is a virtual cyclic redundancy check CRC, and when the DCI is used to activate uplink SPS, the virtual CRC is set to a predefined third bit sequence; or when the DCI is used to deactivate uplink SPS, the virtual CRC is set to a predefined fourth bit sequence.

Specifically, the DCI includes resource allocation information and cyclic redundancy check CRC information, and does not include hybrid automatic repeat request HARQ process number information.

It may be understood that the communications apparatus shown in FIG. 21 may be configured to perform the procedure of the method shown in FIG. 19. Therefore, for a specific implementation, refer to the foregoing embodiment. Details are not described herein again.

For example, the communications apparatus is user equipment. FIG. 22 is a schematic structural diagram of user equipment 2200 according to an embodiment of this application. The user equipment may perform operations of the user equipment in the methods shown in FIG. 10, FIG. 14 to FIG. 17, and FIG. 19, or the user equipment may perform operations of the user equipment shown in FIG. 20.

For ease of description, FIG. 22 shows only main components of the user equipment. As shown in FIG. 22, the user equipment 2200 includes a processor, a memory, an antenna, and an input/output apparatus. The processor is mainly configured to: process a communications protocol and communication data, control the entire user equipment, execute a software program, and process data of the software program. For example, the processor is configured to support the user equipment in performing the procedures described in FIG. 10, FIG. 14 to FIG. 17, and FIG. 19. The memory is mainly configured to store the software program and data. The antenna is mainly configured to send and receive a radio frequency signal in an electromagnetic wave form. It may be understood that the antenna may also be referred to as a transceiver. For example, the transceiver may be configured to perform step 1003 in FIG. 10 to receive the DCI. For details, refer to the descriptions of the foregoing related parts. For another example, the transceiver may be configured to perform step 1603 in FIG. 16 to receive the DCI. For details, refer to the descriptions of the foregoing related parts. The user equipment 2200 may further include an input/output apparatus, for example, a touchscreen, a display, or a keyboard, and is mainly configured to receive data input by a user and output data to the user.

After the user equipment is powered on, the processor may read the software program in a storage unit, interpret and execute the software program, and process the data of the software program. When data needs to be sent in a wireless manner, the processor performs baseband processing on the to-be-sent data, and outputs a baseband signal to a radio frequency circuit. After performing radio frequency processing on the baseband signal, the radio frequency circuit sends out a radio frequency signal through the antenna in the electromagnetic wave form. When data is to be sent to the user equipment, the radio frequency circuit receives a radio frequency signal through the antenna, converts the radio frequency signal into a baseband signal, and outputs the baseband signal to the processor; and the processor converts the baseband signal into data, and processes the data.

A person skilled in the art may understand that, for ease of description, FIG. 22 shows only one memory and only one processor. In practice, there may be a plurality of processors and a plurality of memories in user equipment. The memory may also be referred to as a storage medium, a storage device, or the like. This is not limited in the embodiments of this application.

In an optional implementation, the processor may include a baseband processor and a central processing unit (central processing unit, CPU). The baseband processor is mainly configured to process a communications protocol and communication data, and the CPU is mainly configured to control the entire user equipment, execute a software program, and process data of the software program. Optionally, the processor may alternatively be a network processor (network processor, NP) or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The memory may include a volatile memory (volatile memory), for example, a random access memory (random access memory, RAM); or the memory may include a non-volatile memory (non-volatile memory), for example, a flash memory (flash memory), a hard disk (hard disk, HDD), or a solid-state drive (solid-state drive, SSD); or the memory may include a combination of the foregoing types of memories.

For example, the processor in FIG. 22 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the user equipment may include a plurality of baseband processors to adapt to different network standards, the user equipment may include a plurality of central processing units to enhance processing capabilities of the user equipment, and various components of the user equipment may be connected through various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in the storage unit in a form of the software program. The processor executes the software program, to implement a baseband processing function.

For example, in this embodiment of this application, an antenna having a transceiver function may be considered as a transceiver unit 2201 of the user equipment 2200, and a processor having a processing function may be considered as a processing unit 2202 of the user equipment 2200. As shown in FIG. 22, the user equipment 2200 includes the transceiver unit 2201 and the processing unit 2202. The transceiver unit may also be referred to as a transceiver, a receiver and transmitter, a transceiver apparatus, or the like. Optionally, a component configured to implement a receiving function in the transceiver unit 2201 may be considered as a receiving unit, and a component configured to implement a sending function in the transceiver unit 2201 may be considered as a sending unit. That is, the transceiver unit 2201 includes the receiving unit and the sending unit. For example, the receiving unit may also be referred to as a receiving machine, a receiver, a receiver circuit, or the like. The sending unit may be referred to as a sender, a transmitter, a transmitter circuit, or the like. For example, in an embodiment, the transceiver unit 2201 may be configured to perform the method performed by the receiving unit 2001 shown in FIG. 20.

It may be understood that, for an implementation of the user equipment in this embodiment of this application, refer to the foregoing embodiments. Details are not described herein again.

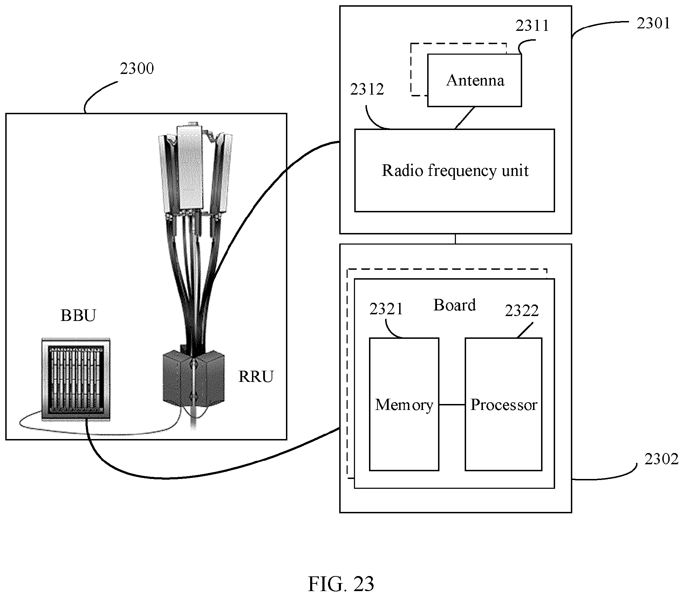

FIG. 23 is a schematic structural diagram of a network device 2300 according to an embodiment of this application. The network device may perform operations of the network device in the methods shown in FIG. 10, FIG. 14 to FIG. 17, and FIG. 19, or the network device may perform operations of the network device shown in FIG. 21.

The network device 2300 includes one or more remote radio frequency units (remote radio unit, RRU) 2301 and one or more baseband units (baseband unit, BBU) 2302. The RRU 2301 may be referred to as a transceiver unit, a receiver and transmitter, a transceiver circuit, a transceiver, or the like, and may include at least one antenna 2311 and a radio frequency unit 2312. The RRU 2301 is mainly configured to send and receive a radio frequency signal and perform conversion between the radio frequency signal and a baseband signal, for example, configured to send the DCI in the foregoing embodiment to the user equipment. The BBU 2302 is mainly configured to perform baseband processing, control the network device, and the like. The RRU 2301 and the BBU 2302 may be physically disposed together, or may be physically separated, that is, in a distributed network device.

The BBU 2302 is a control center of the network device, may also be referred to as a processing unit, and is mainly configured to complete a baseband processing function, for example, channel coding, multiplexing, modulation, and spectrum spreading. For example, the BBU (processing unit) may be configured to control the network device to perform the procedures shown in FIG. 10, FIG. 14 to FIG. 17, and FIG. 19.

In an example, the BBU 2302 may include one or more boards, and a plurality of boards may jointly support a radio access network (such as an LTE network) of a single access standard, or may separately support radio access networks of different access standards. The BBU 2302 further includes a memory 2321 and a processor 2322. The memory 2321 is configured to store a necessary message and necessary data. The processor 2322 is configured to control the network device to perform a necessary action, for example, control the network device to perform the procedures shown in FIG. 10, FIG. 14 to FIG. 17, and FIG. 19. The memory 2321 and the processor 2322 may serve the one or more boards. In other words, a memory and a processor may be separately disposed on each board. Alternatively, the plurality of boards may share a same memory and processor. In addition, a necessary circuit is further disposed on each board. Optionally, the processor may be a CPU, an NP, or a combination of a CPU and an NP. The processor may further include a hardware chip. The hardware chip may be an ASIC, a PLD, or a combination thereof. The PLD may be a CPLD, an FPGA, a GAL, or any combination thereof. The memory may include a volatile memory, such as a RAM. Alternatively, the memory may include a nonvolatile memory, such as a flash memory, a hard disk, or a solid-state drive. Alternatively, the memory may include a combination of the foregoing types of memories.

A person of ordinary skill in the art may be aware that, in combination with the examples described in the embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrically, mechanically, or in another form.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or another programmable apparatus. The computer instruction may be stored in a computer-readable storage medium, or may be transmitted by using the computer-readable storage medium. The computer instruction may be transmitted from a website, a computer, a server, or a data center to another website, another computer, another server, or another data center in a wired (for example, a coaxial cable, an optical fiber, or a digital subscriber line (digital subscriber line, DSL)) or a wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state disk, SSD)), or the like.

A person of ordinary skill in the art may understand that all or some of the processes of the methods in the embodiments may be implemented by a computer program instructing related hardware.

The program may be stored in a computer-readable storage medium. When the program is executed, the procedures in the foregoing method embodiments may be included. The foregoing storage medium includes: any medium that can store program code, such as a read-only memory (read-only memory, ROM), a random access memory (random access memory, RAM), a magnetic disk, or an optical disc.

## Claims

1. A communication method, comprising:
receiving (1003), by a user equipment, downlink control information, DCI, wherein the DCI is used to schedule a transport block, TB, to be transmitted on a downlink channel; and
when the DCI meets a first condition, skipping, by the user equipment, feeding back a positive acknowledgment, ACK, wherein the ACK is used to indicate that the TB is correctly received and skipping, by the user equipment, feeding back a negative acknowledgment, NACK, wherein the NACK is used to indicate that the TB is not correctly received, **characterized in that** the first condition comprises:
an aggregation level, AL, of a physical downlink control channel, PDCCH, carrying the DCI is greater than or equal to an AL threshold.

2. The method according to claim 1, wherein the DCI comprises a first field, and the first field is used to indicate a quantity of times the TB is repeatedly transmitted.

3. The method according to claim 1, wherein the DCI comprises a second field, and the second field is used to indicate whether to repeatedly transmit the TB in a next time unit; or
the DCI comprises a third field, and the third field is used to indicate a sequence number of repeating transmission of the TB.

4. The method according to any one of claims 1 to 3, wherein the DCI comprises resource allocation information, modulation and coding scheme, MCS, information, and cyclic redundancy check, CRC, information, and does not comprise information related to feedback of the ACK or the NACK.

5. The method according to claim 4, wherein the information related to feedback of the ACK or the NACK comprises: hybrid automatic repeat request, HARQ, process number information, ACK or NACK resource indicator, ARI, information, and downlink assignment index, DAI, information.

6. A communication method, comprising:
generating (1001), by a network device, downlink control information, DCI, wherein the DCI is used to schedule a transport block, TB, to be transmitted on a downlink channel; and
sending (1002), by the network device, the DCI to user equipment, wherein when the DCI meets a first condition, the DCI indicates the user equipment not to feed back a positive acknowledgment, ACK, wherein the ACK is used to indicate that the TB is correctly received and the DCI indicates the user equipment not to feed back a negative acknowledgment, NACK, , wherein the NACK is used to indicate that the TB is not correctly received, **characterized in that** the first condition comprises:
an aggregation level, AL, of a physical downlink control channel, PDCCH carrying the DCI is greater than or equal to an AL threshold.

7. The method according to claim 6, wherein the DCI comprises a first field, and the first field is used to indicate a quantity of times the TB is repeatedly transmitted.

8. The method according to claim 6, wherein the DCI comprises a second field, and the second field is used to indicate whether to repeatedly transmit the TB in a next time unit; or
the DCI comprises a third field, and the third field is used to indicate a sequence number of repeating transmission of the TB.

9. The method according to any one of claims 6 to 8, wherein the DCI comprises resource allocation information, modulation and coding scheme, MCS, information, and cyclic redundancy check, CRC, information, and does not comprise information related to feedback of the ACK or the NACK.

10. The method according to claim 9, wherein the information related to feedback of the ACK or the NACK comprises: hybrid automatic repeat request, HARQ, process number information, ACK or NACK resource indicator, ARI, information, and downlink assignment index, DAI, information.

11. A communications apparatus, comprising means for performing the method according to any one of claims 1 to 5 or the method according to any one of claims 6 to 10.

12. A computer-readable storage medium, comprising computer instructions, wherein, when the instructions are executed by a communications apparatus, the communications apparatus is enabled to perform the method according to any one of claims 1 to 5 or the method according to any one of claims 6 to 10.

13. A computer program comprising instructions to cause the device of claim 11 to execute the steps of the method of any one of claims 1 to 5 or the method according to any one of claims 6 to 10.

## Patentansprüche

1. Kommunikationsverfahren, umfassend:
Empfangen (1003) von Downlink-Steuerungsinformationen, DCI (downlink control information) durch ein Benutzergerät, wobei die DCI verwendet werden, um einen Transportblock, TB (transport block), zu planen, der auf einem Downlink-Kanal übertragen werden soll; und
wenn die DCI eine erste Bedingung erfüllen, Überspringen von Rückmelden einer positiven Bestätigung, ACK (positive acknowledgment) durch das Benutzergerät, wobei die ACK verwendet wird, um anzuzeigen, dass der TB korrekt empfangen wurde, und Überspringen des Rückmeldens einer negativen Bestätigung, NACK (negative acknowledgment) durch das Benutzergerät, wobei die NACK verwendet wird, um anzuzeigen, dass der TB nicht korrekt empfangen wurde, **dadurch gekennzeichnet, dass**
die erste Bedingung Folgendes umfasst:
ein Aggregationslevel, AL (aggregation level), eines physischen Downlink-Steuerungskanals, PDCCH (physical downlink control channel), der die DCI trägt, ist größer als oder gleich einem AL-Schwellenwert.

2. Verfahren gemäß Anspruch 1, wobei die DCI ein erstes Feld umfassen und das erste Feld verwendet wird, um eine Anzahl an Malen anzuzeigen, die der TB wiederholt übertragen wird.

3. Verfahren gemäß Anspruch 1, wobei die DCI ein zweites Feld umfassen und das zweite Feld verwendet wird, um anzuzeigen, ob der TB in einer nächsten Zeiteinheit wiederholt übertragen werden soll; oder
die DCI ein drittes Feld umfassen und das dritte Feld verwendet wird, um eine Sequenznummer der wiederholten Übertragung des TB anzuzeigen.

4. Verfahren gemäß einem der Ansprüche 1 bis 3, wobei die DCI Ressourcenzuordnungsinformationen, Informationen über das Modulations- und Codierungsschema, MCS (modulation and coding scheme) und Informationen über die zyklische Redundanzprüfung, CRC (cyclic redundancy check) umfassen und keine Informationen umfassen, die die Rückmeldung der ACK oder der NACK betreffen.

5. Verfahren gemäß Anspruch 4, wobei die die Rückmeldung der ACK oder der NACK betreffenden Informationen Folgendes umfassen: Informationen über die Prozessnummer der hybriden automatischen Wiederholungsanforderung, HARQ (hybrid automatic repeat request), Informationen über den ACK- oder NACK-Ressourcenindikator, ARI (ACK or NACK resource indicator) und Informationen über den Downlink-Zuweisungsindex, DAI (downlink assignment index).

6. Kommunikationsverfahren, umfassend:
Generieren (1001) von Downlink-Steuerungsinformationen, DCI, durch eine Netzwerkvorrichtung, wobei die DCI verwendet werden, um einen Transportblock, TB, zu planen, der auf einem Downlink-Kanal übertragen werden soll; und
Senden (1002) der DCI an ein Benutzergerät durch die Netzwerkvorrichtung, wobei, wenn die DCI eine erste Bedingung erfüllen, die DCI dem Benutzergerät anzeigen, keine positive Bestätigung, ACK, zurückzumelden, wobei die ACK verwendet wird, um anzuzeigen, dass der TB korrekt empfangen wurde, und die DCI dem Benutzergerät anzeigen, keine negative Bestätigung, NACK, zurückzumelden, wobei die NACK verwendet wird, um anzuzeigen, dass der TB nicht korrekt empfangen wurde, **dadurch gekennzeichnet, dass** die erste Bedingung Folgendes umfasst:
ein Aggregationslevel, AL, eines physischen Downlink-Steuerungskanals, PDCCH, der die DCI trägt, ist größer als oder gleich einem AL-Schwellenwert.

7. Verfahren gemäß Anspruch 6, wobei die DCI ein erstes Feld umfassen und das erste Feld verwendet wird, um eine Anzahl an Malen anzuzeigen, die der TB wiederholt übertragen wird.

8. Verfahren gemäß Anspruch 6, wobei die DCI ein zweites Feld umfassen und das zweite Feld verwendet wird, um anzuzeigen, ob der TB in einer nächsten Zeiteinheit wiederholt übertragen werden soll; oder
die DCI ein drittes Feld umfassen und das dritte Feld verwendet wird, um eine Sequenznummer der wiederholten Übertragung des TB anzuzeigen.

9. Verfahren gemäß einem der Ansprüche 6 bis 8, wobei die DCI Ressourcenzuordnungsinformationen, Informationen über das Modulations- und Codierungsschema, MCS und Informationen über die zyklische Redundanzprüfung, CRC umfassen und keine Informationen umfassen, die die Rückmeldung der ACK oder der NACK betreffen.

10. Verfahren gemäß Anspruch 9, wobei die die Rückmeldung der ACK oder der NACK betreffenden Informationen Folgendes umfassen:
Informationen über die Prozessnummer der hybriden automatischen Wiederholungsanforderung, HARQ, Informationen über den ACK- oder NACK-Ressourcenindikator, ARI, und Informationen über den Downlink-Zuweisungsindex, DAI.

11. Kommunikationsgerät, umfassend Mittel zum Durchführen des Verfahrens gemäß einem der Ansprüche 1 bis 5 oder des Verfahrens gemäß einem der Ansprüche 6 bis 10.

12. Computerlesbares Speichermedium, umfassend Computeranweisungen, wobei, wenn die Anweisungen von einem Kommunikationsgerät ausgeführt werden, das Kommunikationsgerät in die Lage versetzt wird, das Verfahren gemäß einem der Ansprüche 1 bis 5 oder das Verfahren gemäß einem der Ansprüche 6 bis 10 durchzuführen.

13. Computerprogramm, umfassend Anweisungen, um die Vorrichtung gemäß Anspruch 11 zu veranlassen, die Schritte des Verfahrens gemäß einem der Ansprüche 1 bis 5 oder des Verfahrens gemäß einem der Ansprüche 6 bis 10 auszuführen.

## Revendications

1. Procédé de communication, comprenant :
la réception (1003), par un équipement utilisateur, d'informations de commande de liaison descendante, DCI, dans lequel les DCI sont utilisées pour planifier un bloc de transport, TB, à transmettre sur un canal de liaison descendante ; et
lorsque les DCI remplissent une première condition, le fait de sauter, par l'équipement utilisateur, le renvoi d'un accusé de réception positif, ACK, dans lequel l'ACK est utilisé pour indiquer que le TB est correctement reçu et le fait de sauter, par l'équipement utilisateur, le renvoi d'un accusé de réception négatif, NACK, dans lequel le NACK est utilisé pour indiquer que le TB n'est pas correctement reçu, **caractérisé en ce que**
la première condition comprend :
un niveau d'agrégation, AL, d'un canal de commande de liaison descendante physique, PDCCH, transportant les DCI, étant supérieur ou égal à un seuil AL.

2. Procédé selon la revendication 1, dans lequel les DCI comprennent un premier champ, et le premier champ est utilisé pour indiquer un nombre de fois où le TB est transmis de manière répétée.

3. Procédé selon la revendication 1, dans lequel les DCI comprennent un deuxième champ, et le deuxième champ est utilisé pour indiquer s'il convient de transmettre de manière répétée le TB dans une unité de temps suivante ; ou
les DCI comprennent un troisième champ, et le troisième champ est utilisé pour indiquer un numéro de séquence de transmission répétée du TB.

4. Procédé selon l'une quelconque des revendications 1 à 3, dans lequel les DCI comprennent des informations d'allocation de ressources, des informations de schéma de modulation et de codage, MCS, et des informations de contrôle de redondance cyclique, CRC, et ne comprennent pas d'informations liées au renvoi de l'ACK ou du NACK.

5. Procédé selon la revendication 4, dans lequel les informations liées au renvoi de l'ACK ou du NACK comprennent : des informations sur le numéro de processus de demande de répétition automatique hybride, HARQ, des informations sur l'indicateur de ressource ACK ou NACK, ARI, et des informations sur l'index d'assignation de liaison descendante, DAI.

6. Procédé de communication, comprenant :
la génération (1001), par un dispositif réseau, d'informations de commande de liaison descendante, DCI, dans lequel les DCI sont utilisées pour planifier un bloc de transport, TB, à transmettre sur un canal de liaison descendante ; et
l'envoi (1002), par le dispositif réseau, des DCI à l'équipement utilisateur, dans lequel lorsque les DCI remplissent une première condition, les DCI indiquent à l'équipement utilisateur de ne pas renvoyer un accusé de réception positif, ACK, dans lequel l'ACK est utilisé pour indiquer que le TB est correctement reçu et les DCI indiquent à l'équipement utilisateur de ne pas renvoyer un accusé de réception négatif, NACK, dans lequel le NACK est utilisé pour indiquer que le TB n'est pas correctement reçu, **caractérisé en ce que** la première condition comprend :
un niveau d'agrégation, AL, d'un canal de commande de liaison descendante physique, PDCCH transportant les DCI, étant supérieur ou égal à un seuil AL.

7. Procédé selon la revendication 6, dans lequel les DCI comprennent un premier champ, et le premier champ est utilisé pour indiquer un nombre de fois où le TB est transmis de manière répétée.

8. Procédé selon la revendication 6, dans lequel les DCI comprennent un deuxième champ, et le deuxième champ est utilisé pour indiquer s'il convient de transmettre de manière répétée le TB dans une unité de temps suivante ; ou
les DCI comprennent un troisième champ, et le troisième champ est utilisé pour indiquer un numéro de séquence de transmission répétée du TB.

9. Procédé selon l'une quelconque des revendications 6 à 8, dans lequel les DCI comprennent des informations d'allocation de ressources, des informations de schéma de modulation et de codage, MCS, et des informations de contrôle de redondance cyclique, CRC, et ne comprennent pas d'informations liées au renvoi de l'ACK ou du NACK.

10. Procédé selon la revendication 9, dans lequel les informations liées au renvoi de l'ACK ou du NACK comprennent : des informations sur le numéro de processus de demande de répétition automatique hybride, HARQ, des informations sur l'indicateur de ressource ACK ou NACK, ARI, et des informations sur l'index d'assignation de liaison descendante, DAI.

11. Appareil de communication comprenant des moyens pour exécuter le procédé selon l'une quelconque des revendications 1 à 5 ou le procédé selon l'une quelconque des revendications 6 à 10.

12. Support de stockage lisible par ordinateur, comprenant des instructions informatiques, dans lequel, lorsque les instructions sont exécutées par un appareil de communication, l'appareil de communication est capable d'exécuter le procédé selon l'une quelconque des revendications 1 à 5 ou le procédé selon l'une quelconque des revendications 6 à 10.

13. Programme informatique comprenant des instructions pour amener le dispositif selon la revendication 11 à exécuter les étapes du procédé selon l'une quelconque des revendications 1 à 5 ou du procédé selon l'une quelconque des revendications 6 à 10.
